# EUROPÄISCHE PATENTSCHRIFT

(11) **EP 0 411 396 B1**
(45) Veröffentlichungstag und Bekanntmachung des Hinweises auf die Patenterteilung: **12.01.1994**
(21) Anmeldenummer: 90113795.0
(22) Anmeldetag: 18.07.1990
(51) Int. Cl.: G21C 7/117

(54) **Einrichtung zur Steuerung der Leistungsabgabe eines Kernreaktors**
Arrangements for the power control of nuclear reactor
Equipement pour la commande de la puissance d'un réacteur nucléaire

(30) Priorität: 02.08.1989 DE 3925617
(43) Veröffentlichungstag der Anmeldung: 06.02.1991
(73) Patentinhaber: SIEMENS AKTIENGESELLSCHAFT, 80333 München (DE)
(72) Erfinder: Strobel, Reinhardt, D-8500 Nürnberg (DE); Spohrer, Jürgen, D-8552 Höchstadt (DE)

(56) Entgegenhaltungen:
- EP-A- 0 054 787
- EP-A- 0 257 337
- DE-A- 2 248 398
- DE-A- 3 009 937
- FR-A- 2 219 494

## Beschreibung

Die Erfindung betrifft eine Einrichtung zur Steuerung der Leistungsabgabe eines Kernreaktors, mit einer Anzahl von jeweils von einem Antrieb bewegbaren Steuerelementen, von denen jedes mehrere Steuerstäbe und ein diese Steuerstäbe miteinander verbindendes Tragstück umfaßt. Jeweils mehrere Steuerelemente sind dabei zu Gruppen mit je einem einzigen Antrieb zusammengefaßt. Eine solche Einrichtung zur Steuerung der Leistungsabgabe eines Kernreaktors ist aus DE-A- 2248398 bekannt.

Ausgehend von der in vielen Kernkraftwerken vorhandenen und bewährten Technik von Druckwasser-Reaktoren wird in einem sogenannten fortschrittlichen Druckwasser-Reaktor unter Verwendung neuartiger Brennelemente bei geringen Änderungen des Druckwasserreaktorkerns eine wesentlich bessere Ausnutzung des Energierohstoffes erreicht. Hierfür muß die mittlere Neutronenenergie im Reaktorkern erhöht werden. Da das Neutronen moderierende Wasser weiterhin gleichzeitig als Kühlmittel verwendet wird, wird in einem fortschrittlichen Druckwasserreaktor die mittlere Neutronenenergie durch Verminderung des Verhältnisses von Moderatorvolumen zu Brennstoffvolumen über den thermischen Bereich hinaus verlagert. Die Einrichtung zur Steuerung der Leistungsabgabe gemäß der Erfindung ist insbesondere für den Reaktorkern eines solchen Druckwasser-Reaktors geeignet.

Bei einem flüssigkeitsgekühlten Reaktorkern sind die Brennelemente in einem im allgemeinen zylinderförmigen Reaktordruckbehälter mit kugelförmiger Boden- und Deckelseite vertikal angeordnet. Das Kühlmittel durchströmt den Reaktordruckbehälter von unten nach oben und ist gleichzeitig Moderator. Jedes Brennelement besteht aus einem Bündel von Brennstäben, die in einem aus Abstandshaltern zusammengesetzten Gitter geführt und in einem gemeinsamen Kopf- und Fußstück beweglich gelagert sind. Die Brennstäbe können sich zwischen den in Gitterplatten gehalterten Kopf- und Fußstücken ausdehnen und sind daher in ihrer axialen Temperaturausdehnung nicht behindert.

Zur Aufnahme von Uranoxid als Brennstoff sind die Brennstäbe als Rohre ausgebildet, in denen der Brennstoff in Tablettenform hermetisch eingeschlossen ist.

Die Steuerung der Leistungsabgabe des Kernreaktors erfolgt unter anderem durch Steuerstäbe, die mehr oder weniger tief in den aktiven Teil des Reaktorkerns eingefahren werden. Hierzu enthalten bestimmte Brennelemente Führungsrohre, in denen die Steuerstäbe verfahren werden können. Allerdings sind beim Betrieb des Kernreaktors nur eine ausgewählte Anzahl von Brennelementen mit Steuerstäben ausgerüstet. Um die Anzahl der Steuerstabantriebe zu verringern, sind jeweils alle demselben Brennelement zugeordneten Steuerstäbe oberhalb des Brennelementes über ein gemeinsames Tragstück, eine Spinne, mit einer einzigen Antriebsstange gekoppelt. Die Antriebsstangen dieser Steuerelemente sind durch den Deckel des Reaktordruckbehälters nach außen zu einzelnen Steuerelementantrieben geführt. Dabei sind die Positionen der Steuerelemente üblicherweise symmetrisch über die Querschnittsfläche des Reaktorkerns verteilt. Die Anzahl der Steuerelemente ist durch die maximal zulässige Anzahl der in den Reaktordruckbehälter-Deckel zur Durchführung der Antriebsstangen eingebrachten Bohrungen begrenzt.

Im Gegensatz zur im Querschnitt quadratischen Struktur der Brennstabgitter des Druckwasserreaktors ist die Brennstabgitterstruktur im fortschrittlichen Druckwasserreaktor im Querschnitt hexagonal. Dadurch wird ein sehr kleiner Abstand zwischen den Brennstäben ermöglicht, so daß in Volumenelementen des Reaktorkerns bei einem fortschrittlichen Druckwasserreaktor im Mittel mehr Brennstoff enthalten ist als im Reaktorkern eines Druckwasserreaktors. Die notwendige Kompaktheit des Reaktorkerns eines fortschrittlichen Druckwasserreaktors hat bei unveränderten Abmessungen des Reaktordruckbehälters eine gegenüber einem herkömmlichen Druckwasserreaktors doppelt so hohe Anzahl von Brennstäben bei nur etwa halber aktiver Kernhöhe zur Folge. Zur sicheren Regelung und/oder Abschaltung des fortschrittlichen Druckwasserreaktors ist es daher notwendig, je Flächenquerschnitt des Reaktorkerns eine größere Anzahl von Steuerelementen vorzusehen als bei einem herkömmlichen Druckwasserreaktor. Andererseits ist, wie eine derartige Anordnung in der Druckschrift ,"Kernreaktoren", von H.-J. Zech, Deutsches Atomforum, Bonn 1988, zeigt, bei unveränderter Abmessung des Reaktordruckbehälters, insbesondere durch die vorgegebene Anzahl der Bohrungen im Reaktordruckbehälter-Deckel, die Anzahl der Antriebsstangen für die Steuerelemente beschränkt.

Der Erfindung liegt daher die Aufgabe zugrunde, eine Einrichtung zu schaffen, mit der bei einer vorgegebenen Anzahl von Steuerelementantrieben je Querschnittsflächeneinheit mehr Steuerelemente im Reaktorkern eines fortschrittlichen Druckwasserreaktors betätigbar sind als in einem bisher üblichen Druckwasserreaktor. Dabei sind die Steuerelemente gleichmäßig flächendeckend und symmetrisch über den gesamten Querschnitt des Reaktorkerns zu verteilen, um eine gleichmäßige Leistungsverteilung im Kern zu erzwingen.

Diese Aufgabe wird für Reaktorkerne der eingangs genannten Art erfindungsgemäß dadurch gelöst, daß jeweils mehrere Steuerelemente zu Gruppen mit je einem einzigen Antrieb zusammengefaßt sind und daß die Gruppen symmetrisch zu mindestens zwei Symmetrieachsen angeordnet sind, die durch den Flächenschwerpunkt des Querschnitts des Reaktorkerns verlaufen und in der Querschnittsebene liegen und daß jede Gruppe von Steuerelementen einer gleich großen Gruppe von Brennelementen zugeordnet ist, welche Brennelementgruppe von Brennelementen umgeben ist, denen keine Steuerelemente zugeordnet sind.

Dabei wird eine besonders vorteilhafte Ausgestaltung der Erfindung dadurch erreicht, daß die Anzahl der Steuerelemente einer Gruppe 1, 2 oder 3 ist und daß bei annähernd kreisförmigem Kernquerschnitt der Winkel zwischen je zwei Symmetrieachsen ein ganzzahliges Vielfaches von 30° ist.

Weitere vorteilhafte Ausgestaltungen der Erfindung sind in den Unteransprüchen 4 bis 8 angegeben.

Die erfindungsgemäße Einrichtung zur Steuerung der Leistungsabgabe eines Kernreaktors hat den Vorteil, daß mit geringem technischen Aufwand durch Zusammenfassung der Steuerelemente zu Gruppen bei unveränderter Anzahl von Steuerelementantrieben wesentlich mehr Steuerelemente je Querschnittsflächeneinheit in den Reaktorkern eingebracht werden können. Dabei wird eine flächendeckende und symmetrische Verteilung der Steuerelemente über den Querschnitt des Reaktorkerns erfindungsgemäß dadurch erreicht, daß die Antriebsstangen von zwei oder drei Steuerelementen durch Umsetzung über jeweils ein Verbindungsstück auf eine Antriebsstange zusammengefaßt sind. Zusammen mit einzeln angetriebenen Steuerelementen ermöglicht dies eine besonders vorteilhafte geometrische Anordnung der Steuerelemente über den Reaktorkernquerschnitt mit sechs Symmetrieachsen, zwischen denen der Winkel ein ganzzahliges Vielfaches von 30° ist. Somit kann bei einer Berechnung der Auslegung und bei der Überwachung des Reaktorkerns ein 30°-Ausschnitt zugrundegelegt und anschließend auf den gesamten Kernquerschnitt hochgerechnet werden. Durch Bildung von Gruppen mit mehr als drei Steuerelementen ist es darüber hinaus möglich, lokal oder über den gesamten Kernquerschnitt eine den jeweiligen Anforderungen entsprechende Anzahl von Brennelementen mit Steuerstäben zu versehen. Die erfindungsgemäße Einrichtung ist besonders vorteilhaft bei einer Umrüstung einer Druckwasserreaktor-Anlage zu einem fortschrittlichen Druckwasserreaktor, da weder der Reaktordruckbehälter-Deckel noch die Steuerelementantriebe ausgetauscht werden müssen.

Ein Ausführungsbeispiel der Erfindung wird anhand einer Zeichnung näher erläutert. Es zeigen:
- FIG 1: im Längsschnitt eine Reaktorkernanordnung bei einem fortschrittlichen Druckwasserreaktor für z.B. 1300 MW mit den darin vorgesehenen Einbauten;
- FIG 2: im Querschnitt einen Reaktordruckbehälter gemäß FIG 1 mit einer erfindungsgemäßen Verteilung von mit und ohne Steuerelementen versehenen Brennelementen und
- FIG 3: eine Führungsplatte für eine drei Steuerelemente tragendes Verbindungsstück.

Einander entsprechende Teile sind in allen Figuren mit den gleichen Bezugszeichen versehen.

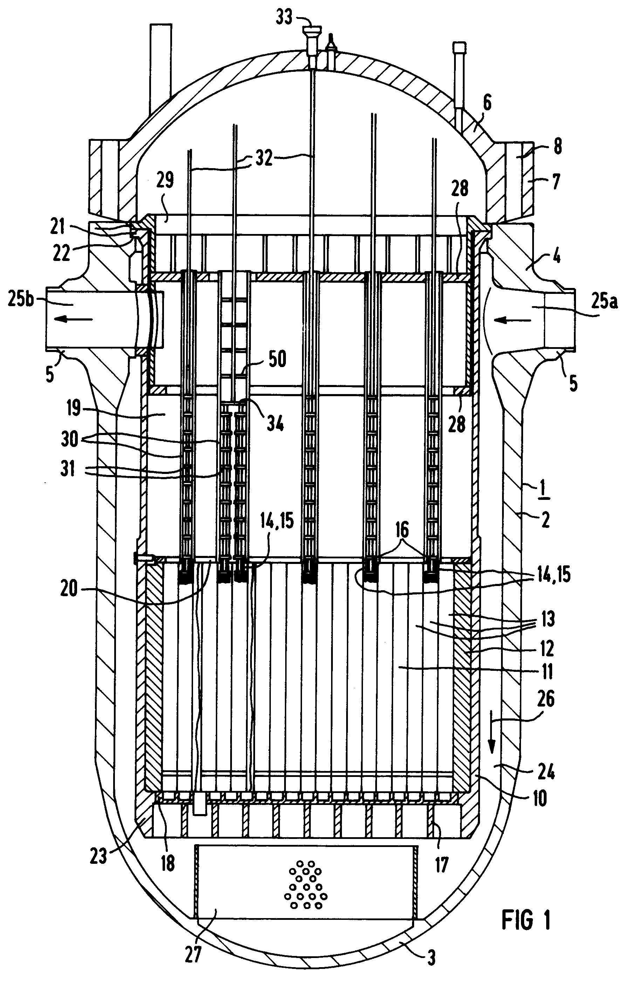

Figur 1 zeigt einen Reaktordruckbehälter 1 für einen fortschrittlichen Druckwasser-Reaktor. Der Reaktordruckbehälter 1 hat einen zylindrischen Mantel 2, der unten durch einen Kugelboden 3 abgeschlossen ist. Im Bereich des Mantels 2 ist ein Ring 4 mit Anschlußstutzen 5 für die vom Reaktordruckbehälter 1 ausgehenden Rohrleitungen zur Kühlmittelführung angeordnet. Oberhalb des Ringes 4 sitzt ein gewölbter Deckel 6, dessen Flansch 7 Bohrungen 8 für die Aufnahme von nicht dargestellten Deckelschrauben aufweist.

Im Reaktordruckbehälter 1 ist ein Kernbehälter 10 angeordnet, der einen Reaktorkern 11 umschließt. Zwischen den Kernbehälter 10 und den Reaktorkern 11 ist eine Kernumfassung 12 eingebracht, die den Kernbehälter 10 gegen die vom Reaktorkern 11 im Betrieb abgestrahlten Neutronen abschirmt. Der Reaktorkern 11 besteht aus einzelnen Brennelementen 13, von denen eine ausgewählte Anzahl mit Steuerelementen 14 versehen sind. Jedes Steuerelement 14 besteht aus einem Bündel von Steuerstäben 15 und einem auch Spinne genannten Tragstück 16, an der die Steuerstäbe 15 gehaltert sind.

Die Brennelemente 13 stehen auf einem unteren Rost 17 in einer unteren Gitterplatte 18. An der Unterseite eines oberen Kerngerüstes 19 sind die Brennelemente 13 in einer oberen Gitterplatte 20 geführt. Für eine 1300 MW-Anlage ist der Reaktordruckbehälter etwa 12 m hoch, hat einen Innendurchmesser von ca. 5 m und eine Wandstärke im zylindrischen Teil von etwa 250 mm. Sein Leergewicht beträgt etwa 500 t. Der Reaktordruckbehälter 1 ist auf einen Betriebsdruck von 175 bar und eine Betriebstemperatur von rund 350° C ausgelegt. Bei einem fortschrittlichen Druckwasserreaktor ist das Verhältnis der Höhe des Reaktordruckbehälters 1 zur Höhe des Reaktorkerns 11 etwa 4 : 1.

Der Kernbehälter 10 ist mit einem Flansch 21 an einer inneren Schulter 22 des Ringes 4 im Reaktordruckbehälter 1 aufgehängt. An seinem unteren Ende besitzt der Kernbehälter 10 einen nach innen weisenden Flansch 23, an dem der untere Rost 17 aufgehängt ist.

Der Kernbehälter 10 ist ebenfalls zylindrisch und bildet mit dem Mantel 2 des Reaktordruckbehälters 1 einen Ringraum 24, der das bei einem Kühlmitteleinlaß 25a zuströmende Kühlmittel in Richtung des Pfeiles 26 nach unten führt. Dort wird es am Kugelboden 3 umgelenkt, so daß es von unten durch den unteren Rost 17 in den Reaktorkern 11 eintritt und bei einem Kühlmittelauslaß 25b aus dem Reaktordruckbehälter 1 abströmt. Da sich wegen der Umlenkung die Strömung auf den mittleren Kernbereich konzentrieren würde, ist zur Vergleichmäßigung der Strömung über den Querschnitt des Reaktorkernes 11 eine sich auf dem Kugelboden 3 abstützende Siebtonne 27 vorgesehen.

In dem oberen Kerngerüst 19 des fortschrittlichen Druckwasserreaktors sind zusätzlich Zentriergitter 28 angeordnet, die zusammen mit einem oberen Kerntragegitter 29 und mit Führungsrohren 30 einen herausnehmbaren Einsatz bilden. Die Führungsrohre 30 sind in ihrem Inneren mit Führungsplatten 31 versehen, in denen Antriebsstangen 32 für die Steuerelemente 14 geführt sind. Die Antriebsstangen 32 sind durch den gewölbten Deckel 6 zu Steuerelementantrieben 33 geführt, von denen lediglich einer gezeichnet ist. Erfindungsgemäß sind einige der Führungsrohre 30 zur Führung einer Gruppe von mehreren Steuerelementen 14 ausgebildet. In Figur 1 ist auch ein Führungsrohr 30 für eine Gruppe von zwei Steuerelementen 14 dargestellt. Die Antriebsstangen 32 der Steuerelemente 14 einer solchen Gruppe sind über ein Verbindungsstück 34 auf eine Antriebsstange 32 umgesetzt.

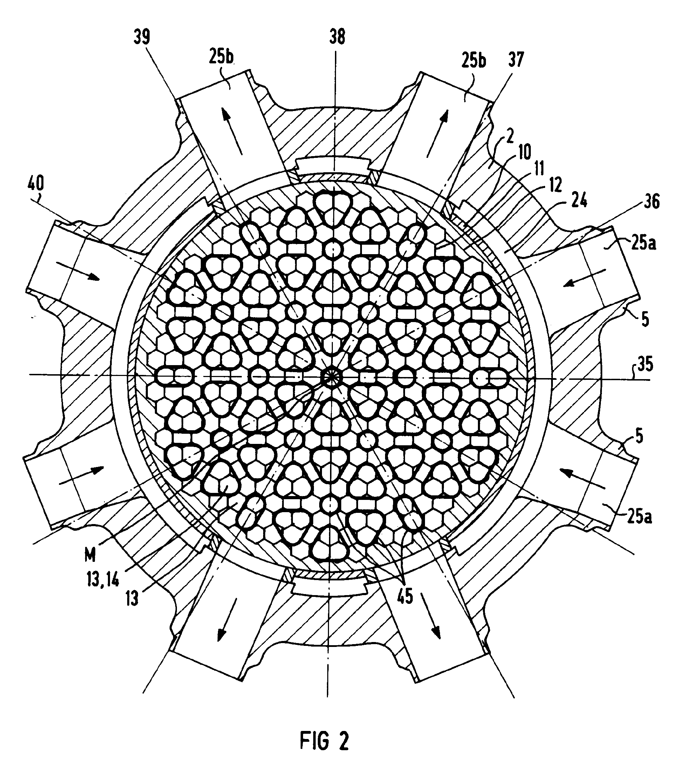

In Figur 2 ist im Querschnitt der Reaktordruckbehälters 1 gemäß Figur 1 mit im Querschnitt hexagonaler Brennstabgitterstruktur dargestellt. Legt man in die Zeichenebene ein rechtwinkliges Koordinatensystem, dessen Ursprung im Flächenschwerpunkt M des Reaktordruckbehälters 1 liegt, so stellt die Abszisse eine 0°-Achse 35 und die Ordinate eine 90°-Achse 38 dar. Der Reaktordruckbehälter 1 ist mit acht Anschlußstutzen 5 zur Kühlmittelführung in vier primären Kühlkreisläufen versehen, wobei die Kühlmitteleinlässe 25a und die Kühlmittelauslässe 25b spiegelsymmetrisch zu den Achsen 35 und 38 angeordnet sind. In diesem Ausführungsbeispiel umfaßt der von der Kernumfassung 12 umschlossene Reaktorkern 11 349 im Querschnitt sechseckige Brennelemente 13, von denen 151 mit Steuerelementen 14 versehen sind. Die einer ausgewählten Anzahl von Brennelementen 13 zugeordneten und erfindungsgemäß zu Gruppen zusammengefaßten Steuerelemente 14 sind zeichnerisch durch Umrandungen 45 hervorgehoben.

Wie in Figur 2 erkennbar, sind - ausgehend vom Flächenschwerpunkt M - jeweils sechs Gruppen mit jeweils drei Steuerelementen 14 um eine Gruppe mit einem einzelnen Steuerelement 14 angeordnet. Dabei ist jede Gruppe von nicht mit Steuerelementen 14 versehenen Brennelementen 13 umgeben. Im Randbereich des Reaktorkerns 11 sind -geometrisch auf der 0°-Achse 35 und auf gegen diese um ein ganzzahliges Vielfaches von 60° verschobenen Achsen 37 und 39 -zusätzlich Gruppen mit jeweils zwei Steuerelementen 14 angeordnet. Zur flächendeckenden und symmetrischen Verteilung der 151 Steuerelemente 14 über den gesamten Querschnitt des Reaktorkerns 11 sind vorteilhafterweise 13 Gruppen mit jeweils einem Steuerelement 14, sechs Gruppen mit jeweils zwei Steuerelementen 14 und 42 Gruppen mit jeweils drei Steuerelementen 14 vorgesehen.

Die sich hieraus ergebende Anordnung der mit Steuerelementen 14 versehenen Brennelemente 13 ist symmetrisch zu sechs Achsen 35 bis 40, zwischen denen der Winkel ein ganzzahliges Vielfaches von 30° ist. Da jede der Achsen 35 bis 40 eine Spiegelachse ist, kann der die Geometrie berücksichtigende Teil einer Berechnung zur Auslegung des Reaktorkerns 11 auf einen beliebigen 30°-Ausschnitt beschränkt werden.

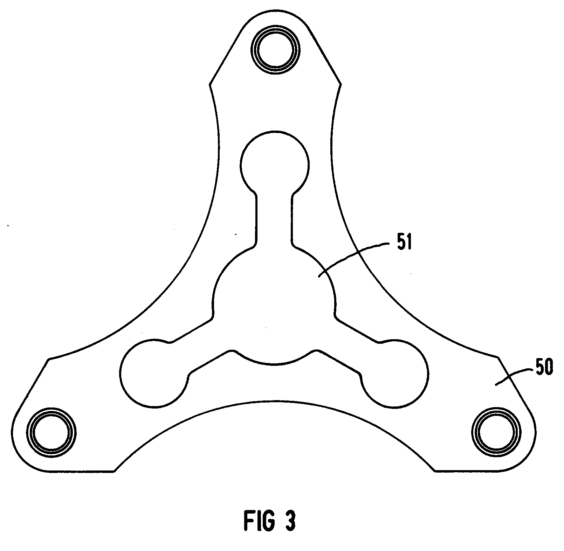

In Figur 3 ist eine dreiarmige Führungsplatte 50 dargestellt, bei der benachbarte Arme jeweils einen Winkel von 120° einschließen. Die Führungsplatte 50 dient der Führung eines Verbindungsstücks 34, mit dem drei Antriebsstangen 32 von drei Steuerelementen 14 auf eine Antriebsstange 32 umgesetzt sind. Hierfür ist die Führungsplatte 50 mit einem dem Verbindungsstück 34 entsprechenden Profil 51 ausgespart.

## Patentansprüche

1. Einrichtung zur Steuerung der Leistungsabgabe eines Kernreaktors, insbesondere für den Reaktorkern (11) eines fortschrittlichen Druckwasser-Reaktors, mit einer Anzahl von jeweils von einem Antrieb (33) bewegbaren Steuerlementen (14), von denen jedes mehrere Steuerstäbe (15) und ein diese Steuerstäbe (15) miteinander verbindendes Tragstück (16) umfaßt,
wobei jeweils mehrere Steuerelemente (14) zu Gruppen mit je einem einzigen Antrieb (33) zusammengefaßt sind, dadurch gekennzeichnet,
daß die Gruppen symmetrisch zu mindestens zwei Symmetrieachsen (35, 38) angeordnet sind, die durch den Flächenschwerpunkt (M) des Querschnittes des Reaktorkerns (11) verlaufen, und in der Querschnittsebene liegen, und
daß jede Gruppe von Steuerelementen (14) einer gleich großen Gruppe von Brennelementen (13) zugeordnet ist, welche Brennelementgruppe von Brennelementen (13) umgeben ist, denen keine Steuerelemente (14) zugeordnet sind.

2. Einrichtung nach Anspruch 1, **dadurch gekennzeichnet,** daß die Anzahl der Steuerelemente (14) einer Gruppe 1, 2 oder 3 ist, und daß demzufolge auch die Anzahl der zugeordneten Brennelemente (13) 1, 2 bzw. 3 ist.

3. Einrichtung nach Anspruch 1 und 2,
**dadurch gekennzeichnet,** daß bei annähernd kreisförmigem Reaktorkernquerschnitt der Winkel zwischen je zwei Symmetrieachsen (35 bis 40) ein ganzzahliges Vielfaches von 30° ist.

4. Einrichtung nach einem der Ansprüche 1 bis 3,
**dadurch gekennzeichnet,** daß der im Querschnitt annähernd kreisförmige Reaktorkern (11) eine hexagonale Brennstabgitterstruktur aufweist.

5. Einrichtung nach einem der Ansprüche 1 bis 4,
**dadurch gekennzeichnet,** daß insgesamt 61 Gruppen von Steuerelementen (14) mit insgesamt 151 Steuerelementen (14) vorgesehen sind,
- wobei die Anzahl der Gruppen mit jeweils einem Steuerelement (14) 13 ist,
- wobei die Anzahl der Gruppen mit jeweils zwei Steuerelementen (14) 6 ist, und
- wobei die Anzahl der Gruppen mit jeweils drei Steuerelementen (14) 42 ist.

6. Einrichtung nach einem der Ansprüche 1 bis 5,
**dadurch gekennzeichnet**, daß die Steuerelemente (14) jeder Gruppe an einem von einem Antrieb (33) bewegbaren Verbindungsstück (34) lösbar gehaltert sind.

7. Einrichtung nach Anspruch 6,
**dadurch gekennzeichnet,** daß das Verbindungsstück (34) in einer mehrarmigen Führungsplatte (50) geführt ist.

8. Einrichtung nach Anspruch 7,
**dadurch gekennzeichnet,** daß der Winkel zwischen benachbarten Armen der Führungsplatte (50) ein der Anzahl der Arme entsprechender Bruchteil von 360° ist.

## Claims

1. Device for the control of the power output of a nuclear reactor, in particular for the reactor core (11) of an advanced pressurised water reactor, having a number of control elements (14) which can be moved by a respective drive (33), each of which control elements comprises several control rods (15) and a support piece (16) which connects these control rods (15) with each other, in which, in each case, several control elements (14) are combined to form groups with respectively one single drive (33), characterised in that the groups are arranged symmetrically relative to at least two axes of symmetry (35, 38) which extend through the area centre of gravity (M) of the cross section of the reactor core (11) and lie in the cross-sectional plane, and in that each group of control elements (14) is associated with a group of fuel elements (13) of equal size, which fuel element group is surrounded by fuel elements (13) with which no control elements (14) are associated.

2. Device according to claim 1, characterised in that the number of control elements (14) of a group is 1, 2 or 3 and in that accordingly the number of the associated fuel elements (13) is also 1, 2 or 3.

3. Device according to claim 1 and 2, characterised in that given a substantially circular cross section of the reactor core, the angle between respectively two axes of symmetry (35 to 40) is an integral multiple of 30°.

4. Device according to one of the claims 1 to 3, characterised in that the reactor core (11), which is substantially circular in cross section, has a hexagonal fuel rod grid structure.

5. Device according to one of the claims 1 to 4, characterised in that in total 61 groups of control elements (14) are provided, having in total 151 control elements (14), in which case the number of groups with respectively one control element (14) is 13, the number of groups with respectively two control elements (14) is 6, and the number of groups with respectively three control elements (14) is 42.

6. Device according to one of the claims 1 to 5, characterised in that the control elements (14) of each group are detachably supported on a connecting piece (34) which can be moved by a drive (33).

7. Device according to claim 6, characterised in that the connecting piece (34) is guided in a multi-armed guide plate (50).

8. Device according to claim 7, characterised in that the angle between adjacent arms of the guide plate (50) is a fraction of 360° corresponding to the number of the arms.

## Revendications

1. Dispositif de commande de la puissance d'un réacteur nucléaire, notamment pour le coeur (11) d'un réacteur à eau sous pression perfectionné, comportant un certain nombre d'éléments de commande (14), qui peuvent être déplaçés respectivement par un dispositif d'entraînement (33) et dont chacun comprend plusieurs barres de commande (15) et un élément de support (16) reliant ces barres de commande (15) entre elles, plusieurs éléments de commande (14) étant réunis en groupes comportant chacun un seul dispositif d'entraînement (33), caractérisé par le fait
que les groupes sont disposés symétriquement par rapport à au moins deux axes de symétrie (35,38), qui passent par le barycentre (M) de la section transversale du coeur (11) du réacteur et qui sont dans le plan de coupe transversal, et
que chaque groupe d'éléments de commande (14) est associé à un groupe aussi grand d'assemblages combustibles (13), ce groupe d'assemblages combustibles étant entouré d'assemblages combustibles (13), auxquels n'est pas associé d'élément de commande (14).

2. Dispositif suivant la revendication 1, caractérisé par le fait que le nombre des éléments de commande (14) d'un groupe est égal à 1, 2 ou 3, et que par conséquent le nombre des assemblages combustibles (13) associés est aussi égal à 1, 2 ou 3.

3. Dispositif suivant les revendications 1 et 2, caractérisé par le fait que pour une section transversale approximativement circulaire du coeur du réacteur, l'angle entre deux axes de symétrie (35 à 40) est un multiple entier de 30°.

4. Dispositif suivant l'une des revendications 1 à 3, caractérisé par le fait que le coeur (11) du réacteur, qui est approximativement circulaire en coupe transversale, a une structure du réseau des crayons combustibles, qui est hexagonale.

5. Dispositif suivant l'une des revendications 1 à 4, caractérisé par le fait qu'il est prévu en tout 61 groupes d'éléments de commande (14) comportant en tout 151 éléments de commande (14),
- le nombre des groupes comportant un élément de commande (14) est égal à 13,
- le nombre des groupes comportant deux éléments de commande (14) est égal à 6, et
- le nombre des groupes comportant respectivement trois éléments de commande (14) étant égal à 42.

6. Dispositif suivant l'une des revendications 1 à 5, caractérisé par le fait que les éléments de commande (14) de chaque groupe sont maintenus de façon amovible sur un élément de liaison (34) pouvant être déplaçé par un dispositif d'entraînement (33).

7. Dispositif suivant la revendication 6, caractérisé par le fait que l'élément de liaison (34) est guidé dans une plaque de guidage (50) comportant plusieurs bras.

8. Dispositif suivant la revendication 7, caractérisé par le fait que l'angle entre deux bras voisins de la plaque de guidage (50) est égal à une fraction de 360°, qui correspond au nombre des bras.
